(19) Europäisches Patentamt / European Patent Office / Office européen des brevets

(11) **EP 2 347 110 B1**

(12) **EUROPEAN PATENT SPECIFICATION**

(45) Date of publication and mention
of the grant of the patent:
**16.09.2015 Bulletin 2015/38**

(51) Int Cl.:
*F01N 3/32* *(2006.01)*        *F02B 37/16* *(2006.01)*
*F02D 13/02* *(2006.01)*        *F02D 41/00* *(2006.01)*
*F02B 37/18* *(2006.01)*

(21) Application number: **09799657.3**

(22) Date of filing: **19.11.2009**

(86) International application number:
**PCT/FI2009/050938**

(87) International publication number:
**WO 2010/058082 (27.05.2010 Gazette 2010/21)**

(54) **METHOD OF CONTROLLING TURBOCHARGER SPEED OF A PISTON ENGINE AND A CONTROL SYSTEM FOR A TURBOCHARGED PISTON ENGINE**

VERFAHREN ZUM STEUERN DER TURBOLADERGESCHWINDIGKEIT EINES KOLBENMOTORS UND STEUERSYSTEM FÜR EINEN TURBOAUFGELADENEN KOLBENMOTOR

PROCÉDÉ DE COMMANDE DE VITESSE DE TURBOCOMPRESSEUR DE MOTEUR À PISTONS ET SYSTÈME DE COMMANDE D'UN MOTEUR À PISTONS TURBOCOMPRESSÉ

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **20.11.2008 FI 20086101**
**20.11.2008 FI 20086102**

(43) Date of publication of application:
**27.07.2011 Bulletin 2011/30**

(73) Proprietor: **Wärtsilä Finland Oy**
**65380 Vaasa (FI)**

(72) Inventors:
• **JÄRVI, Arto**
**FI-65320 Vaasa (FI)**
• **DELNERI, Diego**
**I-IT-34018 Trieste (IT)**
• **TROBERG, Mikael**
**I-IT-34018 Trieste (IT)**
• **KAAS, Tom**
**FI-65410 Sundom (FI)**
• **MÄNTYLÄ, Jukka**
**FI-66400 Laihia (FI)**
• **ÖSTMAN, Fredrik**
**FI-65100 Vaasa (FI)**

(74) Representative: **Ansala, Jyrki Matti et al**
**Genip Oy**
**Heikinkatu 7**
**48100 Kotka (FI)**

(56) References cited:
**EP-A2- 1 905 988        WO-A1-2009/063831**
**WO-A2-2007/034308      US-A- 5 357 936**
**US-A1- 2003 164 163     US-B1- 7 089 738**

## Description

## Technical field

The present invention relates to a method of controlling turbocharger speed of a piston engine according to the preamble of claim 1. The present invention relates to a control system for a turbocharged piston engine according to the preamble of claim 14.

## Background art

Combustion of fuel in a compression ignition internal combustion engine and converting the energy of the fuel into mechanical work is influenced by various factors, some of those being process-related while some factors are relating to mechanical construction of the engine. Modern compression ignited piston engines are commonly provided with a supercharger, usually a turbocharger. Turbocharger arrangement is specifically advantageous due to the fact that it utilizes energy of the exhaust gas of the engine. Thus, by using a turbocharger it is possible e.g. to increase the output and efficiency of the engine. However, in practise a turbocharger, the compressor of which being operated with the exhaust gas turbine, tends to be inefficient at low load operation conditions of the engine. This problem has been commonly tackled by a combination of having a slightly undersized turbine provided with a waste gate through which part of the exhaust gases may bypass the turbine under higher load operation. However, using the waste gate is not beneficial for efficiency in high load operation increasing for example specific fuel consumption of the engine.

There are some operational targets for combustion engines which are generally aimed. Such targets are particularly but not exclusively lowering the specific fuel consumption and exhaust gas emissions. Using a turbocharger is generally accepted way of improving the performance of an internal combustion engine. The operation of a turbocharger is influenced by the characteristics and adaptation of the interrelated compressor and turbine. Using high pressure ratios in the compressor i.e. using substantially high charge pressure in the intake system of the engine is beneficial. The operation of the compressor part of the turbocharger is restricted on one hand by the limit that corresponds to maximum flow capacity of the compressor and on the other hand by the surge margin. Surging of the compressor is detrimental to the operation of the engine, since the pressure and flow of the combustion air supplied to the engine will decrease as soon as the compressor surges. For this reason, in order to ensure optimum operation of the compressor and the engine in changing conditions, there should be a specific safety margin between the operating point of the compressor and the surge limit. Also the operating efficiency of the compressor is at its highest, when the operating point is at a certain distance from the surge limit.

An important issue relating to the operation of a turbocharged piston engine is valve timing. As an example of a device for accomplishing alterations in timing of the valve we refer to document WO 9830787 A1. There is shown a device for controlling the valves on an internal combustion engine which makes it possible to delay the opening of the engine's valve and closing the valve earlier making the open time of the valve shorter. According to the document this may be used for both intake and exhaust valves but the document fails to disclosed specific applications of such a device. Particularly in a large piston engines i.e. engines having cylinder diameter greater or equal to 200 mm and/or capable of producing a power over 150 kW/cylinder, the control of the engine and the combustion process is very demanding e.g. due to the substantially large combustion space. Also the inertia of the moving parts has its influence on the transient operation. Taken that the demands on the performance of the engine have recently considerably raised, there is a need for advanced control system with which the engine may be operated within the required limits whether in the terms of power, emissions and/or other operational targets.

WO 2008/000899A1 shows an arrangement for adjusting the closing moment of a gas exchange valve of a combustion engine making it possible e.g. make the closing of the valve later than normally e.g. in different load situations of the engine.

US 6,105,555 disclose a turbocharged internal combustion engine having a system and method for preventing a rapid decrease of turbocharger power during rapid fuel reduction transients in engine operation. An exhaust valve control device capable of varying the timing of opening of the engine exhaust valves is provided. The exhaust valve control device advance the timing of opening of the exhaust valves to cause additional exhaust gas to be delivered to the turbine thereby preventing a rapid decrease of compressor speed and preventing compressor surge. US 2003/164163 discloses a similar turbocharged engine, also equipped with variable valve actuators.

An object of the invention is to provide a method of controlling turbocharger speed of a piston engine, the operation of which is more efficient than prior art engines.

## Disclosure of the invention

In this context the term "percent-degrees" (%deg) means an integral of relative valve position over a range of crank angle, wherein the percentage means valve position in relation to cylinder diameter. Crank angle represent a position of the crank shaft of an engine, in which a full cycle of four stroke engine comprises 720° beginning at top dead center before the power stroke.

Objects of the invention are met with a method of controlling turbocharger speed of a piston engine which comprises at least one intake valve and at least one exhaust valve, an intake valve operating system and an exhaust valve operating system arranged for operating the valves, and a turbocharger arrangement comprising a compressor part being in flow connection with the inlet side of the at least one intake valve and a turbine part being in flow connection with the exhaust side of the at least one exhaust valve, in which method engine is run in a first mode of operation in which the engine is operated below or at a predetermined load and combustion air is pressurised with the compressor part of the turbocharger arrangement, the intake valve is controlled by a first intake valve lift profile and the air is introduced to the cylinder, fuel is combusted in the engine by means of combustion air, the exhaust valve is controlled by a first exhaust valve lift profile and exhaust gases generated during the combustion are conveyed to the turbine part of the turbocharger arrangement. It is characteristic to the invention that the engine is run in a second mode of operation above the predetermined load during which the closing of the inlet valve is advanced compared to that of the first mode of operation and that the air flow between an outlet of the compressor part and an inlet of the turbine part is increased allowing more combustion aire to flow through the compressor part.

According to a preferred embodiment of the invention the engine is provided with a turbocharger equipped with a waste gate. In this case the waste gate is controlled so that in the first mode of operation the waste gate is open and in the second mode of operation the waste gate is closed. This provides the higher charge air pressure during the second mode of operation. Increased charge air pressure compensates the effect of advanced closing of the inlet valve and simultaneously increases the gas flow through the engine during a scavenging phase of the engine. The waste gate may also be controlled so that in the first mode of operation the waste gate is closed and in the second mode of operation the waste gate is maintained closed.

According to another preferred embodiment of the invention the engine is provided with a turbocharger without a waste gate. In this case the turbocharger is designed to provide adequately increased charge pressure in the second mode of operation as well as provide required performance in the first mode of operation.

Advantageously during the second mode of operation the closing of the inlet valve lift is controlled to be closed to 1% of cylinder bore at crank angle about 20° earlier than during the first mode of operation.

The 1% open-position is used in connection with this specification in the definition because in practise the 1% opening position is easily detectable and is less ambiguous than the initial beginning of opening from totally closed position.

According to an embodiment of the invention during the second mode of operation the closing of the inlet valve lift is controlled to be closed to 1% of cylinder bore at crank angle between 35-65° before bottom dead center.

According to another embodiment of the invention during the second mode of operation the air flow between an outlet of the compressor part and an inlet of the turbine part is increased by admitting more air through a bypass conduit provided in the engine extending between an outlet side of the compressor part and an inlet side of the turbine part.

According to another embodiment of the invention fuel is ignited by an external ignition and during the first mode of operation the closing of the exhaust valve lift and the opening of the intake valve lift are overlapped forming a scavenging area and during the second mode of operation the scavenging area is controlled to be 5 - 300% bigger than during the first mode of operation.

According to a still another embodiment of the invention compression ignition is practised in the engine and during the first mode of operation the closing of the exhaust valve lift and the opening of the intake valve lift are overlapped forming a scavenging area and that during the second mode of operation the scavenging area is controlled to be 5 - 60% bigger than during the first mode of operation.

Advantageously during the second mode of operation the scavenging area is more than 150 %deg. During the second mode of operation the closing of the exhaust valve lift is preferably controlled to be closed to 1% of cylinder bore at crank angle about 15° later than during the first mode of operation.

Preferably the intake valves are operated so that during the opening movement the valve lift is at 1% position while the crank angle is between 15-50° before top dead center.

According to a still another embodiment of the invention fuel ignition timing during the second mode of operation is more than 0° and less than or equal to 5° (crank angle) advanced to that of the first mode of operation. Preferably the fuel ignition timing is about 2-3° (crank angle) advanced.

The predetermined load is 70-85% of the maximum load of the engine.

According to a preferred embodiment the engine is operated during the second mode of operation above the predetermined engine load so that while combusting fuel by means of combustion air pressurized by a turbocharger assembly, intake valves of the engine are closed earlier than in the first mode of operation, and the boost pressure obtained by the turbocharger assembly is increased, and amount of bypass air flow between an outlet side of the compressor part and an inlet side of the turbine part is increased, increasing the air mass flow through the compressor part.

According to a preferred embodiment of the invention the engine is provided with a waste gate and the boost pressure is increased by closing a waste gate of the turbocharger assembly during the second mode of operation.

Objects of the invention are also met by a control system for a turbocharged four stroke piston engine having a turbocharger with a waste gate intake and exhaust valves, in which at least intake or exhaust valves comprising adjustable valve operating system, the control system comprising a processing unit, a control signal transmitting unit and a control signal receiving unit, the signal transmitting unit being in connection at least with one of the engine's valve operating system and the signal receiving unit being in connection with engine sensors monitoring engine's load, speed and/or at least one combustion process variable. The processing unit is arranged to process the signals received by the signal receiving unit and provide the signal to be transmitted by the signal transmitting unit in such a manner that a change in the state of the valve operating system is initiated based on information from anyone of the engine sensors monitoring engine's load, speed and at least one combustion process variable.

Preferably the control system is arranged to operate so that, while 70-73% load is exceeded (the second mode of operation), the control system sets and/or maintains the waste gate in closed state, and advances intake valve closing time and delaying the exhaust valve closing.

A four stroke piston engine in which the method is practised comprises at least one intake valve and at least one exhaust valve, an intake valve operating system and an exhaust valve operating system arranged for operating the valves, and a turbocharger arrangement comprising a compressor part being in flow connection with the inlet side of the at least one intake valve and a turbine part being in flow connection with the exhaust side of the at least one exhaust valve. The piston engine is provided with an adjustable flow connection between an outlet side of the compressor part and an inlet side of the turbine part, and that the intake valve operating system comprises means for adjusting timing of closing of the intake valve.

This way the operation of the engine and the turbocharger may be efficiently controlled.

Advantageously the adjustable flow connection between the outlet of the compressor part and the inlet of the turbine part comprises the intake valve operating system and the exhaust valve operating system having adjustable valve overlapping during the closing of the exhaust valve lift and opening movement of the intake valve.

This way the operation of the turbocharger may be controlled advantageously by controlling valve overlapping having positive effect on engine's thermal load.

According an embodiment of the invention the adjustable flow connection between the outlet of the compressor part and the inlet of the turbine part comprises adjustable valve overlapping such that the intake valve operating system is provided with adjustable timing of valve opening.

According another embodiment of the invention the adjustable flow connection between the outlet of the compressor part and the inlet of the turbine part comprises adjustable valve overlap such that the exhaust valve operating system having adjustable closing of valve timing.

According another embodiment of the invention the adjustable flow connection between an outlet side of the compressor part and an inlet side of the turbine part comprises a bypass conduit and a control valve provided in the conduit.

Invention has several benefits. Invention provides for example an efficient control for operation of compressor part of a turbocharger. Additionally thermal load of the engine is minimised. Specifically, the invention provides efficient way of controlling the firing pressure of the engine and turbocharger speed in the high load range of the engine. Additionally, NOx emissions are reduced due to the advanced inlet valve closing. Specific fuel consumption is also decreased at high load range of the engine.

## Brief Description of Drawing

In the following the invention will be described with reference to the accompanying exemplary, schematic drawings, in which

> Figure 1 illustrates a piston engine according to the first embodiment of the invention,
> Figure 2 illustrates valve lift profiles according to the first embodiment of the invention,
> Figure 3 illustrates exemplary compressor map in connection with the invention,
> Figure 4 illustrates valve lift profiles according to the second embodiment of the invention,
> Figure 5 illustrates valve lift profiles according to the third embodiment of the invention,
> Figure 6 illustrates a piston engine according to the second embodiment of the invention and,
> Figure 7 illustrates a control system in a turbocharged four stroke piston engine according to an embodiment of the invention.

## Detailed Description of Drawings

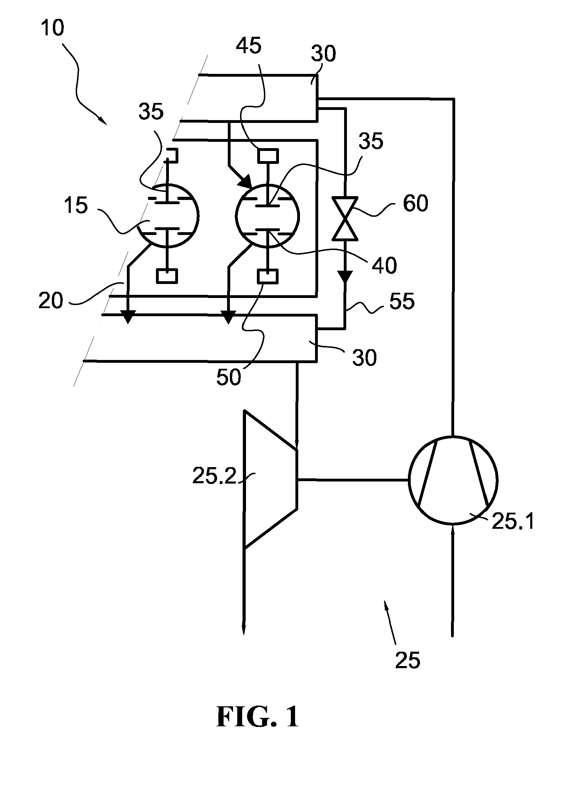

Figure 1 schematically shows part of a piston engine 10. The engine comprises cylinders 15 arranged in the body 20 of the engine. The engine is a supercharged four stroke engine provided with a turbocharger arrangement 25. The turbocharger arrangement 25 is coupled to its gas exchange system 30. The turbocharger arrangement 25 comprises a compressor part 25.1 and a turbine part 25.2 the basic operation and construction is known as such. In the embodiment of figure 1 there is a single turbocharger connected to the engine but it is clear that the compressor arrangement may comprise also a combination of more than one turbocharger.

To make the drawing clearer each cylinder 15 is provided with one intake valve 35 and one exhaust valve 40 and a valve operating system 45, 50, which is arranged to open and close the valves in respect to the crank angle of the engine. However, in practise, and in connection with this application, the number of the valves may be more than one. The valve operating system includes preferably a camshaft coupled to the crank shaft of the engine which is not shown here for clarity reasons. The compressor part 25.1 is arranged in flow connection with the intake valves 35 of the engine. Respectively, the turbine part 25.2 is arranged in flow connection with the exhaust valves 40 of the engine. In practise, when a multicylinder engine is in question, the compressor part may be coupled to an air receiver and the turbine part may be coupled to the exhaust manifold of the engine.

In the first embodiment of the invention there is also a bypass conduit 55 provided in the engine extending between an outlet side of the compressor part and an inlet side of the turbine part as shown in figure 1. More specifically, in this embodiment the conduit is arranged to connect the air receiver of the engine to the exhaust manifold, but the conduit may also be integrated to the turbocharger arrangement 25. The bypass conduit 55 is provided with controllable flow adjusting means 60, such as a control valve. Thus, an adjustable flow connection between an outlet side of the compressor part and an inlet side of the turbine part is formed by the bypass conduit 55.

Further, according to the first embodiment of the present invention at least the valve operation system 45 of the intake valve 35 is provided with means for adjusting closing timing of the valve. The intake valve operation system 45 is arranged to operate so that the closing time of the intake valve may be adjusted during the operation of the engine. In this connection this means setting the operation between distinct states or continuous control. This makes it possible to practise a following method in connection with the engine according to the first embodiment of the invention, in which the mode of operation is changed based on the load of the engine.

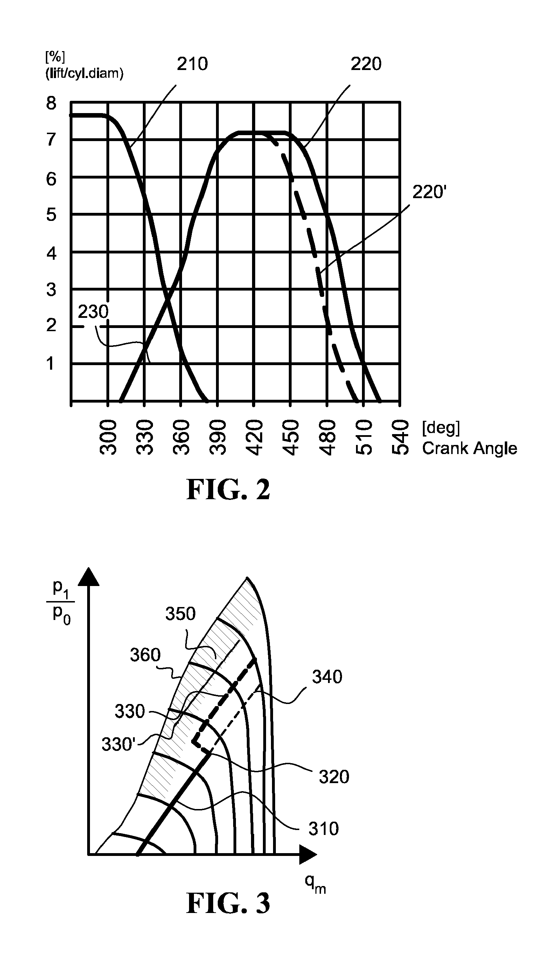

While operating the engine in a first mode of operation below or at a predetermined load, the exhaust valve operating system 50 and intake valve operating system 45 are operated according to an embodiment of the invention so that the valves are operated with lift profiles as is depicted with solid lines in the figure 2. It should be noted that in the figure 2 only the range of crank angle which is relevant to explaining the operation of the invention is shown. In this context the valve lift, i.e. the position of the valve is expressed in relation to the cylinder bore diameter in question. In figure 2 the valve lift profile of the exhaust valve 210 according to which the exhaust valve operating system 45 is arranged to control the operation of the exhaust valve 40 is shown as solid line. As can be seen the exhaust valve lift in the first embodiment of the invention is not substantially changed between the first and the second modes of operation. Accordingly, the lift profile of the intake valves 220 according to which the intake valve operating system 45 is arranged to control the operation of the intake valve 35 in the first mode of operation is shown as solid line, as well.

In the embodiment shown in figure 2 the exhaust valves are operated so that the lift profile during the closing movement is at 1% open-position while the crank angle is between 0-15°, preferably 3-6° after top dead center. Total opening movement of the exhaust valve is about 7,5 % and start of the closing movement takes place about at 290° crank angle. This provides proper operation of the exhaust valves of the engine according to the first embodiment the invention.

In the first embodiment of the invention the so called scavenging area 230 has an area of about 95 %deg, shown in figure 2.

The intake valves 35 in turn are operated so that during the opening the valve lift 220 is at 1% position preferably while the crank angle is between 15-50°, preferably 30-40° before top dead center. During the closing of the valve, the valve lift 220 is at 1% position preferably while the crank angle is between 35-65°, preferably 40-50° before bottom dead center.

According to the first embodiment of the invention, while operating the engine in a second mode of operation the operation above the predetermined load, comprises following phases. In figure 2 the lift profile of the intake valve 220' according to which the intake valve operating system 45 is arranged to control the operation of the intake valve 35 in the second mode of operation is shown as dashed line. During the second mode of operation the intake valves 35 are operated so that during the closing movement the lift profile 220' is at 1% position preferably while the crank angle is between 35-65 °, preferably 50° before bottom dead center, that is about 20° before than in the first mode of operation. This way the time during which the inlet valves are opened is decreased by closing the valves earlier compared to the first mode of operation. Preferably substantially the whole closing movement is advanced with about 20° compared to that of the first mode of operation.

In the operation of the engine in practise this means that since the load of the engine is increased, the boost pressure obtained from the turbocharger arrangement naturally is increased. However, according to the invention the boost pressure is increased more than conventionally due to the fact that with waste-gate turbochargers the waste gate is typically opened at higher loads. In the operation of the engine according to the invention the boost pressure obtained from the turbocharger arrangement in the second mode of operation is increased by closing the waste gate of the turbocharger. According to another embodiment of the invention the boost pressure obtained from the turbocharger arrangement in the second mode of operation is increased by matching the operation of the turbocharger arrangement with the shortened inlet valve open time, for example, by proper overall dimensioning of the turbocharger.

This is beneficial for the overall operation of the engine in several ways. Although the open time is decreased the obtained higher boost pressure substantially compensates the amount of air in the charge of the cylinder.

Further according to the first embodiment of the invention, simultaneously with decreasing the open time of the inlet valves by closing the valves earlier, the flow connection between an outlet side of the compressor part 25.1 and an inlet side of the turbine part, that is the bypass 55, is opened allowing more combustion air to flow through the compressor part 25.1 of the turbocharger arrangement 25. This way the working point of the compressor part 25.1 in the compressor map moves farther from the surge line.

Advantageously, the predetermined load is preferably 70-85% of the maximum load of the engine. Thus, in the first mode of operation the engine is operated below or at 70-85% of the maximum load of the engine, and in the second mode of operation the engine is operated above 70-85% of the maximum load of the engine.

The operation of the invention in connection with the compressor part 25.1 is illustrated in figure 3, which is an exemplary compressor map of the compressor part 25.1. The operating line during the first mode of operation i.e. below or at the predetermined load is illustrated with the reference 310. The pressure obtained by the compressor part is steadily increased while the load of the engine is increased and the rotational speed of the compressor part is increased respectively. Now at a certain point, which is illustrated with reference 320, the second mode of operation is initiated. With the higher loads above the point 320, the operating line 330 is made to follow a modified operating line compared to conventional waste-gate controlled turbocharger arrangement, the operating line of which is shown as dotted lined with reference 340. In the conventional arrangement the waste-gate is opened while operating in the operating line 340. The position of the modified operating line 330 is controlled by the combination of controlling the intake valve closing timing as described above and the flow connection between an outlet side of the compressor part 25.1 and an inlet side of the turbine part so as to keep the operating line 330 on the right side (in the figure 3) of a certain surge margin, the hatched area 350 in the figure. The surge margin is about 10-15% from the surge line 360 of the compressor part 25.1. Thus, in the method the point of shifting to the second mode of operation is determined based on the compressor map of the used turbocharger.

In figure 3 there is also shown an imaginary operating line 330' which represents condition in which the second mode of operation would not include the step of, simultaneously with decreasing the open time of the inlet valves by closing the valves earlier, opening the flow connection between an outlet side of the compressor part 25.1 and an inlet side of the turbine part, thus allowing more combustion air to flow through the compressor part 25.1 of the turbocharger arrangement 25. This way the working point of the compressor part 25.1 in the compressor map moves farther from the surge line, 330' -> 330.

The surge margin provides a measure of how close an operating point is to surge. In this context the surge margin is defined as follows:

$$\text{Surge margin} = 100\% * (q_w - q_s) / q_w$$

where:

$q_w$ - Volume flow at the operating line, and

$q_s$ - Volume flow at surge line

Thus, according to the first embodiment of the invention the engine is operated during the second mode of operation above the predetermined engine load so that while combusting fuel by means of combustion air pressurized by a turbocharger assembly, intake valves of the engine are closed earlier than in the first mode of operation, and the boost pressure obtained by the turbocharger assembly is increased, and amount of bypass air flow between an outlet side of the compressor part 25.1 and an inlet side of the turbine part is increased, increasing the air mass flow through the compressor part.

This provides an efficient manner to control the operation of the engine and specifically the operation of the compressor part 25.1 of the turbocharger arrangement which result several advantageous effects in operation of the engine.

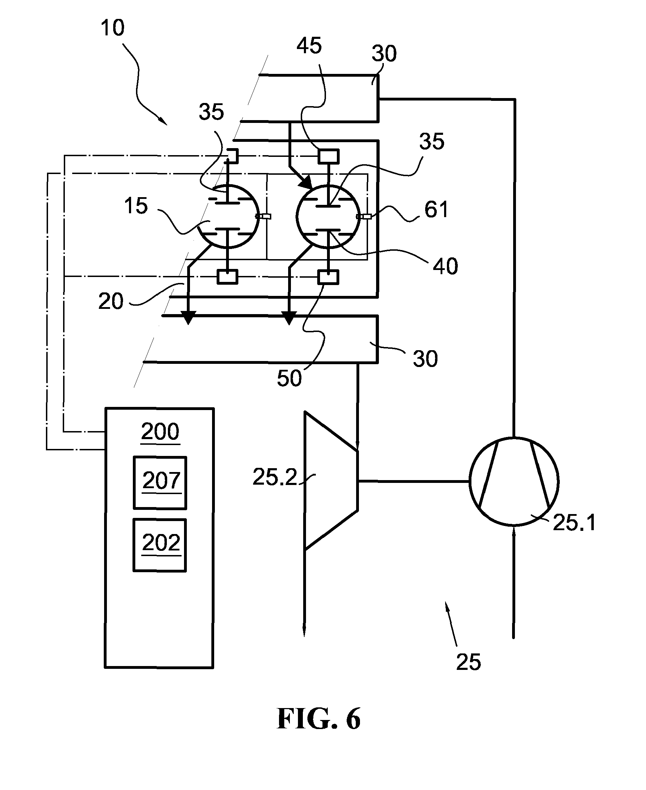

A substantially equivalent behaviour of the compressor part 25.1 and the engine 10 may be accomplished with the second embodiment of the invention and further some additional advantageous effects may be achieved. According to the second embodiment of the invention, which is depicted in figure 6, the engine 10 differs from that shown in figure 1 on one hand that the bypass conduit 55 is not needed. On other hand, also the exhaust valve operation system 50 is provided with adjustable valve operation function. According to the second embodiment of the invention the valve operation system 45 of the intake valve 35 is provided with means for adjusting closing timing of the valve. The intake valve operation system 45 is arranged to operate so that the closing time of the intake valve may be adjusted during the operation of the engine. In this connection this means setting the operation between distinct states or continuous control. This makes it possible to practise a following method in connection with the engine according to the second embodiment of the invention. Also, the valve operation system 50 of the exhaust valve 40 is provided with means for adjusting closing timing of the valve. The exhaust valve operation system 50 is arranged to operate so that the closing time of the intake valve may be adjusted during the operation of the engine. In this connection this means setting the operation between distinct states or continuous control. This makes it possible to practise a following method in connection with the engine according to the second embodiment of the invention, in which the mode of operation is changed based on the load of the engine.

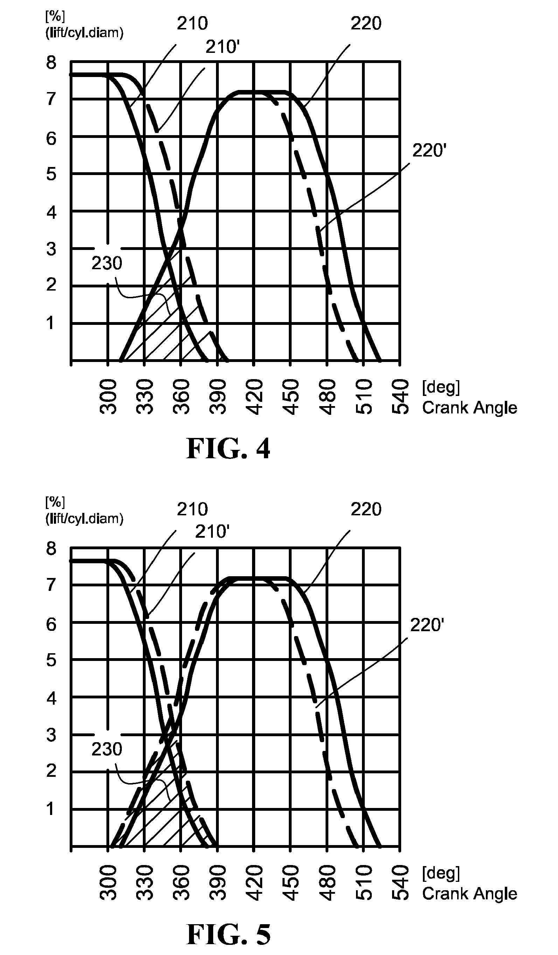

The method is according to the second embodiment of the invention is explained with the reference to figure 4. Now, while operating the engine in a first mode of operation, below or at a predetermined load, the exhaust valve operating system 50 and intake valve operating system 45 is operated according to the second embodiment of the invention as is depicted in the figure 4. Here also only the range of crank angle which is relevant to explaining the operation of the invention is shown. In figure 4 the valve lift profile of the exhaust valve 210 according to which the exhaust valve operating system 45 is arranged to control the operation of the exhaust valve 40 in the first mode of operation is shown as solid line. Accordingly the lift profile of the intake valve 220 according to which the intake valve operating system 45 is arranged to control the operation of the intake valve 35 in the first mode of operation is shown as solid line, as well.

In the embodiment shown in figure 4 the exhaust valves are operated in the first mode of operation so that the lift profile during the closing movement is at 1% open-position while the crank angle is between 0-15°, preferably 3-6° after top dead center. Total opening movement of the exhaust valve is about 7,5 % and the start of the closing movement takes place about at 290° crank angle.

During the first mode of operation the so called scavenging area 230 has an area of about 95 %deg.

The intake valves 35 in turn are operated so that during the opening movement of the valve the lift profile 220 is at 1% position preferably while the crank angle is between 15-50°, preferably 30-40° before top dead center. During the closing movement of the valve the valve lift profile 220 is at 1% position preferably while the crank angle is between 35-65°, preferably 40-50° before bottom dead center.

According to the second embodiment of the invention, while operating the engine in a second mode of operation, the exhaust valve operating system 50 and intake valve operating system 45 is operated as is depicted with dashed line in the figure 4. In figure 4 the valve lift profile of the exhaust valve 210' according to which the exhaust valve operating system 45 is arranged to control the operation of the exhaust valve 40 in the second mode of operation is shown as dashed line. Accordingly the lift profile of the intake valves 220' according to which the intake valve operating system 45 is arranged to control the operation of the intake valve 35 in the second mode of operation is shown as dashed line, as well.

In the exemplary embodiment of figure 4, during the second mode of operation the exhaust valves are operated so that the lift profile during the closing movement is at 1% open-position while the crank angle is between 15-25°after top dead center. Start of the closing movement of the exhaust valves takes place about at 310° crank angle. The intake valves 35 in turn are operated in the second mode of operation so that during the closing movement the lift profile 220' is at 1% position preferably while the crank angle is between 35-65°before bottom dead center.

In practise, what is more important than exact crank angle values of the exhaust valve closing and inlet valve opening to the present invention, is the scavenging area 230. In the second mode of operation the called scavenging area 230 has an area of about 160 %deg. Thus, in the exemplary second embodiment of the invention the scavenging area 230 is increased about 70% while the shifting from the fist mode of operation to the second mode of operation.

It should be understood that the shifting from the first mode of the operation to the second mode of operation may involve quite different changes in different kind of engines, also depending on the actual application of the engine. However, the common features are always advancing the closing of the inlet valve lift and arranging increased air passage between the outlet of the compressor part and the inlet of the turbine part of the turbocharger. The increased air passage is preferably accomplished by increasing the scavenging area as disclosed above.

As an example, in a gas engine in which fuel is ignited by an external ignition, such as spark or laser beam, the scavenging area during the first mode of operation may be very small, sometimes even zero. In such a case the valve overlapping i.e. the scavenging area, during the second mode of operation may be increased several hundreds of percents.

In diesel engines the scavenging area during the second mode of operation is increased typically 5 - 60 percents.

Thus, according to the second embodiment of the invention the engine is operated during the second mode of operation so that while combusting fuel by means of combustion air pressurized by a turbocharger assembly, intake valves of the engine are closed earlier than in the first mode of operation, and that the boost pressure obtained by the turbocharger assembly is increased, and exhaust valves of the engine are closed later than in the first mode of operation increasing the airflow through the engine. The boost pressure obtained by the turbocharger assembly is increased preferably by maintaining the turbine by-pass closed or closing it.

This provides an equivalent operation and benefits for controlling the operation of the engine 10 and the compressor part 25.1 of the turbocharger as is shown in figure 3. In the second embodiment of the invention the time during which the inlet valves are opened is decreased by closing the valves earlier in the second mode of operation. Although the open time is decreased the obtained higher boost pressure substantially compensates the amount of air in the charge of the cylinder. Simultaneously with decreasing the open time of the inlet valves by closing the valves earlier, the open time of the exhaust valves is increased by closing the exhaust valves later. This increases the overlap of the valve open-period during the second mode of operation allowing more air to flow through the engine 10, and thus also through the compressor part 25.1 of the turbocharger arrangement 25. This way the working point of the compressor part 25.1 in the compressor map moves farther from the surge line.

With the second embodiment of the invention in which the operation during the second mode of operation comprises increasing the valve overlapping i.e. so called scavenging area 230 while the closing of the inlet valves is advanced, more air is flown through the engine during the scavenging phase. The valve overlapping range during the scavenging phase in this example takes place substantially between crank angle 310 - 380°.

According to a still another embodiment of the invention the intake and exhaust valves are controlled to operate so that the scavenging area is asymmetric on the exhaust valve's side.

Admitting the air flow through the engine 10 instead of (or in addition to) using the by-pass conduit 55 has the beneficial effect of decreasing thermal load of the engine component in the cylinder and cylinder head, that is mainly the valves and the top of the piston.

In figure 5 there is shown the operation of valves according to a third embodiment of the invention. The engine according to the third embodiment corresponds to that of the second embodiment i.e. the bypass conduit may be omitted. The operation of the third embodiment during the first mode of operation corresponds to that of the second embodiment and the operation of the third embodiment during the second mode of operation corresponds to that of the second embodiment except that the intake valve operating system 45 is arranged to operate so that both the opening timing and closing timing is advanced compared to the operation during the first mode of operation. The effect of advancing the closing timing corresponds to that of the first and the second embodiment.

In this case the scavenging area 230 is increased about 50% while the shifting from the fist mode of operation to the second mode of operation.

Increasing the air flow during the second mode of operation in the third embodiment of the invention is accomplished by combination of controlling the closing timing of the exhaust valves and the opening timing of the inlet valves, thus increasing the valve overlapping range and the scavenging area 230 during the scavenging phase.

In practise the valve operating system 45, 50 may be realized in various manners. Changing or adjusting closing timing may be realized for example as is disclosed in WO 2008/000899.

Now turning to figure 6, a still another embodiment of the invention is described in the following. The engine is provided with control system 200 which among other operations of the engine 10 is arranged control e.g. the operation of the valves 35, 40 by means of the valve operating system 45, 50 and the fuel injection and/or ignition system 61. The control system comprises a memory unit 207, into which the operational parameters of the engine are stored. The control system 200 comprises a processing unit 202, which is arranged to define the working conditions of the engine. In case the control system 200 gets the information that the load of the engine is changed so that the load is increased above the predetermined load it controls the intake valves to close earlier. In addition this, it also controls the exhaust valves to close later as describe above in connection with the second embodiment. Further, in case the engine is a direct injection engine (e.g. diesel or gas engine) the control system controls the fuel injection system 61 to advance the timing of the injection and/or ignition. With gas engines this comprises controlling of injection of pilot fuel and/or spark or other ignition system.

This is performed by the processing unit 202. Based on the measurement of engine load and/or speed the control system controls the valve operation systems 45, 50 so that the actual surge margin is maintained between a lower and upper set value. Preferably the lower set value is about 10% and the upper set value is about 15%.

Maintaining the surge margin between the lower and the upper set value comprises the following steps:

    1) In case the actual surge margin is lower than a lower set value

- the valve operation system 45,50 is controlled to run the valves so that the size of the scavenging area 230 is increased i.e. the overlap of the valve is increased around the 360° crank angle and/or

- the inlet valve operation system 45 is controlled to run the inlet valve so that the closing timing is delayed

    2) In case the actual surge margin is higher than a higher set value

- the valve operation system 45,50 is controlled to run the valves so that the size of the scavenging area 230 is decreased i.e. the overlap of the valve is decreased around the 360° crank angle and/or

- the inlet valve operation system 45 is controlled to run the inlet valve so that the closing timing is advanced.

The fact that the inlet valve closing is advance during the second mode of operation result in sharply decreasing NOx emissions,. Thus it is advantageous to advance the fuel injection timing during the second mode of operations. Preferably the fuel injection timing during the second mode of operation is at least 0-5° (crank angle) advanced to that of the first mode of operation. As an example, when operating the engine with the first mode of operation the fuel injection takes place at about 13-15° before top dead center, while during the second mode of operation fuel injection may take place at about 17° before top dead center. This way the specific fuel consumption during the second mode of operation may be considerably lower than in the conventional waste-gate controlled turbocharger engine.

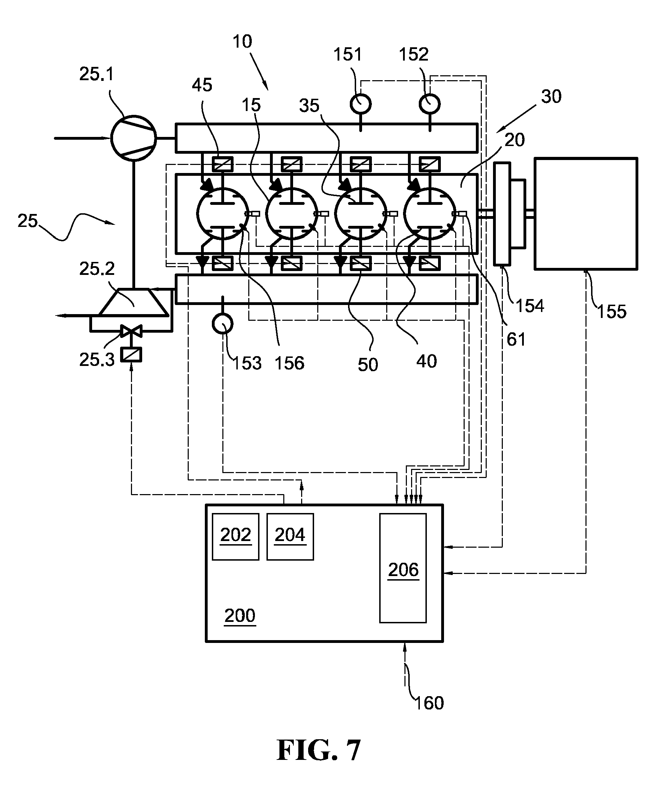

Figure 7 schematically shows a control arrangement for piston engine 10 according to a still another embodiment of the invention. The engine comprises cylinders 15 arranged in the body 20 of the engine. The engine is a supercharged four stroke engine provided with a turbocharger arrangement 25. More specifically the engine is a large piston engine having cylinder diameter greater or equal to 200 mm and/or arranged to produce power substantially more than 150 kW / cylinder.

The turbocharger arrangement 25 is coupled to the gas exchange system 30 of the engine. The turbocharger arrangement 25 comprises a compressor part 25.1 and a turbine part 25.2 the basic operation and construction is known as such. Further, the turbocharger is provided with a waste gate system 25.3, allowing or preventing a part of the exhaust gas by-passing the turbine part. In the embodiment of Figure7 there is a single turbocharger connected to the engine but it is clear that the compressor arrangement may comprise also a combination of more than one turbochargers.

To make the figure 7 clearer each cylinder 15 is provided with one intake valve 35 and one exhaust valve 40 only and a valve operating system 45, 50, which is arranged to open and close the valves in respect to the crank angle of the engine. The compressor part 25.1 is arranged in flow connection with the intake valves 35 of the engine. Respectively, the turbine part 25.2 is arranged in flow connection with the exhaust valves 40 of the engine. In practise, when a multi-cylinder engine is in question, the compressor part may be coupled to an air receiver and the turbine part may be coupled to the exhaust manifold of the engine. The engine is also provided with a fuel injection and/or ignition system 61.

There are sensors arranged in connection with the engine 10 and its control system 200 in order to monitor certain variables relating to the combustion process taken place in the engine and/or relating to certain process apparatuses of the engine.

In figure 7 the engine is provided with a charge air temperature sensor 151 and a charge air pressure sensor 152. These sensors provide information representing the operation of e.g. the compressor part 25.1 of the turbocharger. The engine is also provided with a speed sensor 154 and engine load sensor 155. The engine is also provided with en exhaust gas temperature sensor 153, cylinder knock / ignition timing / cylinder pressure sensor 156. These all are sensors for monitoring combustion process variables. There are also other combustion process variables which may be determined making use on available information such as fuel injection timing and duration.

Preferably at least the valve operation system 45 of the intake valve 35 is provided with means for adjusting closing timing of the valves. The intake valve operation system 45 is arranged to operate so that the closing time of the intake valve may be adjusted during the operation of the engine by the control system 200.

The control system 200 is arranged to control the operation of the inlet valve operating system according to a preferred embodiment by setting the intake valve closing between at least two distinct states. This makes it possible to practise a following method in connection with the engine according to the first embodiment of the invention, in which the mode of operation is changed based on the load of the engine.

The control system 200 comprises a processing unit 202, control signal transmitting unit 204 and a control signal receiving unit 206. The control signal transmitting unit 204 is arranged to transmit signal from the control system to selected devices. It is arranged in connection with actuators 25.3, 45 arranged in the engine in order to change the state of engine's control apparatuses. The signal transmitting unit 204 is also in connection with at least with engine's intake valve operating system 45. The signal transmitting unit 204 is also in connection with the waste gate 25.3 of the turbocharger depending on the application. The signal receiving unit is arranged to receive a signal to the control system. It is arranged in connection with engine sensors monitoring engine's variables, particularly engine's load 154, speed 155 and/or at least one combustion process variable 151, 152, 153, 156.

The processing unit 202 is arranged to process the signals received by the signal receiving unit 206 and provide the signal to be transmitted by the signal transmitting unit 204. The control system is arranged to operate in such a manner that a change in the state of the valve operating system 45, 50 is initiated based on information from anyone of the engine sensors monitoring engine's load 155, speed 154, at least one combustion process variable and/or external activation 160. This makes it possible to control the operation of the inlet valves of the turbocharged four stroke engine with comprehensive approach.

While the control system 200 operates the valves in a first mode of operation below or at a predetermined load, the exhaust valve operating system 50 and intake valve operating system 45 are operated according to an embodiment of the invention so that the valves are operated with lift profiles as is depicted with solid lines in the figure 2.

In case anyone of the engine sensors monitoring engine's load 155, speed 154, at least one combustion process variable or external activation 160 has passed a limit value the control system 200 initiates the change of the state of the operation from the first mode of operation to the second mode of operation, so that the valves are operated with lift profiles as is depicted with dashed lines in the figure 2.

The closing moment of the inlet valves has great impact on engine's behaviour in process-vice. The closing moment effects on the total time the inlet valves are open and thus the amount of combustion air. Additionally the closing moment effects on the temperature of the charge air after the compression stroke. According to the invention the control system 200 is arranged to operate in such a manner that a change in the state of the intake valve operating system 45 is initiated based on information from anyone of the engine sensors monitoring engine's load, speed and at least one combustion process variable. This way the combustion of the engine is under strict control during various operating circumstances of the engine.

The control system is provided with an individual limit value for each of the sensors monitoring engine's operation and/or other engine's operational variable. Preferably the variables may be divided into three base event groups: 1) Speed/load Activation, 2) Load transient Activation 3) External Activation. Thus, the change in the state of the inlet valve operating system i.e. in the state of the inlet valve closing timing is initiated by a predetermined change in a variable belonging to anyone of the event groups.

The speed/load activation is based on predetermined operating ranges of the engine where each defined operating range is associated with a specific state of the valve stored in or made available to the control system. The valve state transition due to the current speed/load is initiated when the actual value of the speed/load passes the limit value between the set of neighbouring operating ranges.

The load transient activation is based on limit values stored in or made available to the control system relating to the engine's operational variables. There is a limit value for each monitored variable and the processing unit is arranged to initiate the change in the state of the intake valve operating system in case the actual value of the signal of anyone of variables passes the limit value of the load.

The external activation is based on any desired external event which initiates the change in the state of the intake valve operating system.

The speed/load activation in practise means that the load of the engine is increased or decreased so that the actual value of the speed/load passes the limit value. When the load of the engine raises so that it passes the limit value, the boost pressure obtained from the turbocharger arrangement is naturally also increased. In the operation of the control system according to the invention the control system is arranged to increase the boost pressure obtained from the turbocharger arrangement by initiating the closing of the waste gate of the turbocharger, or maintaining it closed, substantially simultaneously with advancing the closing of the inlet valve. This is done preferably when the load of the engine exceeds 70-80% of the maximum load of the engine.

While the invention has been described herein by way of examples in connection with what are, at present, considered to be the most preferred embodiments, it is to be understood that the invention is not limited to the disclosed embodiments. The details mentioned in connection with any embodiment above may be used in connection with another embodiment when technically feasible.

## Claims

1. Method of controlling turbocharger speed of a piston engine comprising at least one intake valve (35) and at least one exhaust valve (40), an intake valve operating system (45) and an exhaust valve operating system (45) arranged for operating the valves (35, 40), and a turbocharger arrangement comprising a compressor part being in flow connection with the inlet side of the at least one intake valve and a turbine part being in flow connection with the exhaust side of the at least one exhaust valve, in which method engine is run in a first mode of operation in which the engine is operated below or at a predetermined load and combustion air is pressurised with the compressor part of the turbocharger arrangement, the intake valve is controlled by a first intake valve lift profile and the air is introduced to the cylinder, fuel is combusted in the engine (10) by means of combustion air, the exhaust valve is controlled by a first exhaust valve lift profile and exhaust gases generated during the combustion are conveyed to the turbine part of the turbocharger arrangement, **characterized in that** the engine is run in a second mode of operation above the predetermined load during which the working point of the compressor part (25.1) in the compressor map is moved farther from the surge line increasing the air flow between an outlet of the compressor part and an inlet of the turbine part by increasing the overlap of the valve open-period.

2. Method of operating piston engine according to claim 1, **characterized in that** the closing of the inlet valve is advanced compared to that of the first mode of operation.

3. Method of operating piston engine according to claim 1, **characterized in that** during the second mode of operation the closing of the inlet valve is controlled to be closed to 1 % of cylinder bore at crank angle between 35-65° before bottom dead center.

4. Method of operating piston engine according to claim 1, 2 or 3, **characterized in that** during the second mode of operation the closing of the inlet valve lift is controlled to be closed to 1% of cylinder bore at crank angle about 20° earlier than during the first mode of operation.

5. Method of operating piston engine according to claim 1, **characterized in that** during the second mode of operation the air flow between an outlet of the compressor part and an inlet of the turbine part is increased by admitting more air through a by-pass conduit (55) provided in the engine (10) extending between an outlet side of the compressor part and an inlet side of the turbine part.

6. Method of operating piston engine according to claim 1, **characterized in that** fuel is ignited by an external ignition and during the first mode of operation the closing of the exhaust valve lift and the opening of the intake valve lift are overlapped forming a scavenging area and that during the second mode of operation the scavenging area (230) is controlled to be 5 - 300% bigger than during the first mode of operation.

7. Method of operating piston engine according to claim 1, **characterized in that** compression ignition is practised in the engine and during the first mode of operation the closing of the exhaust valve lift and the opening of the intake valve lift are over-lapped forming a scavenging area (230) and that during the second mode of operation the scavenging area is controlled to be 5 - 60% bigger than during the first mode of operation.

8. Method of operating piston engine according to claim 1, **characterized in that** during the second mode of operation the scavenging area (230) is more than 150 %deg.

9. Method of operating piston engine according to claim 1, **characterized in that** intake valves (35) are operated so that during the opening movement the valve (35) is at 1% position while the crank angle is between 15-50° before top dead center.

10. Method of operating piston engine according to claim 1, **characterized in that** the valve operating system (45, 50) is operated so that a scavenging area (230) is asymmetric so that inlet valve lift profile forms bigger area than the exhaust valve lift profile in respect to top dead center.

11. Method of operating piston engine according to anyone of the preceding claims 1 - 9, **characterized in that** the fuel injection timing during the second mode of operation is at least 0-5° advanced to that of the first mode of operation.

12. Method of operating piston engine according to anyone of the preceding claims 1-10, **characterized in that** the predetermined load is 70-85% of the maximum load of the engine.

13. Method of operating piston engine according to anyone of the preceding claims 1 - 12, **characterized in that** the engine is operated during the second mode of operation above the predetermined engine load so that while combusting fuel by means of combustion air pressurized by a turbocharger assembly, intake valves of the engine are closed earlier than in the first mode of operation, and the boost pressure obtained by the turbocharger assembly is increased, and amount of bypass air flow between an outlet side of the compressor part (25.1) and an inlet side of the turbine part is increased, increasing the air mass flow through the compressor part.

14. Method of operating piston engine according to claim 13, **characterized in that** the boost pressure is increased by closing a waste gate of the turbocharger assembly during the second mode of operation.

15. A control system (200) for a turbocharged piston engine having a turbocharger with a waste gate, intake (35) and exhaust valves (40), in which at least intake or exhaust valves comprising adjustable valve operating system (45, 50), the control system (200) comprising a processing unit (202), a control signal transmitting unit (204) and a control signal receiving unit (206), the signal transmitting unit being in connection at least with one of the engine's valve operating system (45, 50) and the signal receiving unit being in connection with engine sensors monitoring engine's load, speed and/or at least one combustion process variable, **characterized in that** the processing unit is arranged to process the signals received by the signal receiving unit and provide the signal to be transmitted by the signal transmitting unit in order to maintain the actual surge margin between a lower and upper set value, making use of the following steps:

> 1) In case the actual surge margin is lower than a lower set value
>
>> - the valve operation system (45,50) is controlled to run the valves so that the size of the scavenging area (230) is increased i.e. the overlap of the valve is increased around the 360° crank angle and/or
>> - the inlet valve operation system (45) is controlled to run the inlet valve so that the closing timing is delayed
>
> 2) In case the actual surge margin is higher than a higher set value
>
>> - the valve operation system (45,50) is controlled to run the valves so that the size of the scavenging area (230) is decreased i.e. the overlap of the valve is decreased around the 360° crank angle and/or

- the inlet valve operation system (45) is controlled to run the inlet valve so that the closing timing is advanced.

16. A control system (200) for a turbocharged four stroke piston engine according to claim 14, **characterized in that** that a change in the state of the valve operating system is initiated based on information from anyone of the engine sensors monitoring engine's load, speed and at least one combustion process variable.

17. A control system (200) for a turbocharged four stroke piston engine according to claim 14, **characterized in that** the control system is arranged to operate so that, while 70-73% load is exceeded, the control system sets and/or maintains the waste gate (25.3) in closed state, and advances intake valve closing (220') time and delaying the exhaust valve closing (210').

**Patentansprüche**

1. Verfahren zum Steuern einer Turbolader-Drehzahl einer Kolbenkraftmaschine, umfassend wenigstens ein Einlassventil (35) und wenigstens ein Auslassventil (40), ein Einlassventil-Betriebssystem (45) und ein Auslassventil-Betriebssystem (50), die zum Betreiben der Ventile (35, 40) angeordnet sind, und eine Turboladeranordnung, die einen Verdichterteil, der in Strömungsverbindung mit der Einlassseite des wenigstens einen Einlassventils steht, und einen Turbinenteil, der in Strömungsverbindung mit der Auslassseite des wenigstens einen Auslassventils steht, umfasst, wobei bei diesem Verfahren die Kraftmaschine in einem ersten Betriebsmodus unterhalb oder einer vorbestimmten Last betrieben wird und Verbrennungsluft mit dem Verdichterteil der Turboladeranordnung unter Druck gesetzt wird, das Einlassventil durch ein erstes Einlassventil-Hubprofil gesteuert wird und die Luft in den Zylinder eingeleitet wird, Kraftstoff mit Hilfe von Verbrennungsluft in der Kraftmaschine (10) verbrannt wird, das Auslassventil durch ein erstes Auslassventil-Hubprofil gesteuert wird und während der Verbrennung erzeugte Abgase zu dem Turbinenteil der Turboladeranordnung befördert werden, **dadurch gekennzeichnet, dass** die Kraftmaschine in einem zweiten Betriebsmodus oberhalb der vorbestimmten Last betrieben wird, während dessen der Arbeitspunkt des Verdichterteils (25.1) in dem Verdichterkennfeld weiter von der Pumpgrenze weg bewegt wird, was durch das Steigern der Überschneidung des Ventilöffnungszeitraums den Luftstrom zwischen einem Auslass des Verdichterteils und einem Einlass des Turbinenteils steigert.

2. Verfahren zum Betreiben einer Kolbenkraftmaschine nach Anspruch 1, **dadurch gekennzeichnet, dass** das Schließen des Einlassventils, verglichen mit demjenigen des ersten Betriebsmodus, vorgezogen wird.

3. Verfahren zum Betreiben einer Kolbenkraftmaschine nach Anspruch 1, **dadurch gekennzeichnet, dass** während des zweiten Betriebsmodus das Schließen des Einlassventils so gesteuert wird, dass es bei einem Kurbelwinkel zwischen 35 und 65° vor dem unteren Totpunkt zu 1 % der Zylinderbohrung geschlossen wird.

4. Verfahren zum Betreiben einer Kolbenkraftmaschine nach Anspruch 1, 2 oder 3, **dadurch gekennzeichnet, dass** während des zweiten Betriebsmodus das Schließen des Einlassventilhubs so gesteuert wird, dass es bei einem Kurbelwinkel, etwa 20° früher als während des ersten Betriebsmodus, zu 1 % der Zylinderbohrung geschlossen wird.

5. Verfahren zum Betreiben einer Kolbenkraftmaschine nach Anspruch 1, **dadurch gekennzeichnet, dass** während des zweiten Betriebsmodus der Luftstrom zwischen einem Auslass des Verdichterteils und einem Einlass des Turbinenteils durch das Einlassen von mehr Luft durch eine in der Kraftmaschine (10) bereitgestellte Umgehungsleitung (55), die sich zwischen einer Auslassseite des Verdichterteils und einer Einlassseite des Turbinenteils erstreckt, gesteigert wird.

6. Verfahren zum Betreiben einer Kolbenkraftmaschine nach Anspruch 1, **dadurch gekennzeichnet, dass** Kraftstoff durch eine äußere Zündung gezündet wird und während des ersten Betriebsmodus das Schließen des Auslassventilhubs und das Öffnen des Einlassventilhubs überschnitten werden, wobei ein Spülungsbereich gebildet wird, und dass während des zweiten Betriebsmodus der Spülungsbereich (230) so gesteuert wird, dass er 5 bis 300 % größer ist als während des ersten Betriebsmodus.

7. Verfahren zum Betreiben einer Kolbenkraftmaschine nach Anspruch 1, **dadurch gekennzeichnet, dass** in der Kraftmaschine Kompressionszündung umgesetzt wird und während des ersten Betriebsmodus das Schließen des Auslassventilhubs und das Öffnen des Einlassventilhubs überschnitten werden, wobei ein Spülungsbereich (230) gebildet wird, und dass während des zweiten Betriebsmodus der Spülungsbereich so gesteuert wird, dass er 5 bis 60 % größer ist als während des ersten Betriebsmodus.

**8.** Verfahren zum Betreiben einer Kolbenkraftmaschine nach Anspruch 1, **dadurch gekennzeichnet, dass** während des zweiten Betriebsmodus der Spülungsbereich (230) mehr als 150 %-Grad beträgt.

**9.** Verfahren zum Betreiben einer Kolbenkraftmaschine nach Anspruch 1, **dadurch gekennzeichnet, dass** Einlassventile (35) so betrieben werden, dass während der Öffnungsbewegung sich das Ventil (35) bei einer 1%-Position befindet, während der Kurbelwinkel zwischen 15 und 50° vor dem oberen Totpunkt liegt.

**10.** Verfahren zum Betreiben einer Kolbenkraftmaschine nach Anspruch 1, **dadurch gekennzeichnet, dass** das Ventil-Betriebssystem (45, 50) so betrieben wird, dass ein Spülungsbereich (230) asymmetrisch ist, so dass das Einlassventil-Hubprofil einen größeren Bereich bildet als das Auslassventil-Hubprofil in Bezug auf den oberen Totpunkt.

**11.** Verfahren zum Betreiben einer Kolbenkraftmaschine nach einem der vorhergehenden Ansprüche 1 bis 9, **dadurch gekennzeichnet, dass** die Kraftstoff-Einspritzzeit während des zweiten Betriebsmodus wenigstens 0 bis 5° gegenüber derjenigen des ersten Betriebsmodus vorgezogen ist.

**12.** Verfahren zum Betreiben einer Kolbenkraftmaschine nach einem der vorhergehenden Ansprüche 1 bis 10, **dadurch gekennzeichnet, dass** die vorbestimmte Last 70 bis 85 % der maximalen Last der Kraftmaschine beträgt.

**13.** Verfahren zum Betreiben einer Kolbenkraftmaschine nach einem der vorhergehenden Ansprüche 1 bis 12, **dadurch gekennzeichnet, dass** die Kraftmaschine während des zweiten Betriebsmodus oberhalb der vorbestimmten Kraftmaschinenlast betrieben wird, so dass, während Kraftstoff mit Hilfe von durch eine Turbolader-Baugruppe unter Druck gesetzter Verbrennungsluft verbrannt wird, Einlassventile der Kraftmaschine eher geschlossen werden als in dem ersten Betriebsmodus und der durch die Turbolader-Baugruppe erlangte Ladedruck gesteigert wird und eine Menge an Umgehungsluftstrom zwischen einer Auslassseite des Verdichterteils (25.1) und einer Einlassseite des Turbinenteils gesteigert wird, was den Luftmassenstrom durch den Verdichterteil steigert.

**14.** Verfahren zum Betreiben einer Kolbenkraftmaschine nach Anspruch 13, **dadurch gekennzeichnet, dass** der Ladedruck während des zweiten Betriebsmodus durch das Schließen eines Ladedruck-Regelventils der Turbolader-Baugruppe gesteigert wird.

**15.** Steuerungssystem (200) für eine turbogeladene Kolbenkraftmaschine mit einem Ladedruck-Regelventil, Einlass- (35) und Auslassventilen (40), bei dem wenigstens Einlass- oder Auslassventile ein einstellbares Ventil-Betriebssystem (45, 50) umfassen, wobei das Steuerungssystem (200) eine Verarbeitungseinheit (202), eine Steuersignal-Sendeeinheit (204) und eine Steuersignal-Empfangseinheit (206) umfasst, wobei die Signal-Sendeeinheit in Verbindung wenigstens mit einem der Ventil-Betriebssysteme (45, 50) der Kraftmaschine steht und die Signal-Empfangseinheit in Verbindung mit Kraftmaschinensensoren steht, welche Last, Drehzahl und/oder wenigstens eine Verbrennungsprozessvariable der Kraftmaschine überwachen, **dadurch gekennzeichnet, dass** die Verarbeitungseinheit dafür angeordnet ist, die durch die Signal-Empfangseinheit empfangenen Signale zu verarbeiten und das durch die Signal-Sendeeinheit zu sendende Signal bereitzustellen, um die tatsächliche Pumpgrenze zwischen einem unteren und einem oberen Sollwert zu halten, wobei Gebrauch gemacht wird von den folgenden Schritten:

1) in dem Fall, dass die tatsächliche Pumpgrenze niedriger ist als ein unterer Sollwert,

- wird das Ventil-Betriebssystem (45, 50) so gesteuert, dass es die Ventile so laufen lässt, dass die Größe des Spülungsbereichs (230) gesteigert wird, d.h., die Überschneidung des Ventils wird um den Kurbelwinkel von 360° gesteigert, und/oder
- das Einlassventil-Betriebssystem (45) wird so gesteuert, dass es das Einlassventil so laufen lässt, dass die Schließzeit verzögert wird,

2) in dem Fall, dass die tatsächliche Pumpgrenze höher ist als ein höherer Sollwert,

- wird das Ventil-Betriebssystem (45, 50) so gesteuert, dass es die Ventile so laufen lässt, dass die Größe des Spülungsbereichs (230) vermindert wird, d.h., die Überschneidung des Ventils wird um den Kurbelwinkel von 360° vermindert, und/oder
- das Einlassventil-Betriebssystem (45) wird so gesteuert, dass es das Einlassventil so laufen lässt, dass die Schließzeit vorgezogen wird.

**16.** Steuerungssystem (200) für eine turbogeladene Viertakt-Kolbenkraftmaschine nach Anspruch 14, **dadurch gekennzeichnet, dass** eine Veränderung bei dem Zustand des Ventil-Betriebssystems auf der Grundlage von Informationen von einem beliebigen der Kraftmaschinensensoren steht, welche Last, Drehzahl und/oder wenigstens eine Verbrennungsprozessvariable der Kraftmaschine überwachen, eingeleitet wird.

17. Steuerungssystem (200) für eine turbogeladene Viertakt-Kolbenkraftmaschine nach Anspruch 14, **dadurch gekennzeichnet, dass** das Steuerungssystem dafür angeordnet ist, so zu arbeiten, dass, während eine Last von 70 bis 73 % überschritten wird, das Steuerungssystem das Ladedruck-Regelventil (25.3) in geschlossenen Zustand stellt und/oder in demselben hält und die Einlassventil-Schließzeit (220') vorzieht und die Auslassventil-Öffnungszeit (210') verzögert.

**Revendications**

1. Procédé de commande de la vitesse du turbocompresseur d'un moteur à pistons comprenant au moins une soupape d'admission (35) et au moins une soupape d'échappement (40), un système de fonctionnement des soupapes d'admission (45) et un système de fonctionnement des soupapes d'échappement (50) agencés pour faire fonctionner les soupapes (35, 40), et un agencement de turbocompresseur comprenant une partie de compresseur en connexion fluidique avec le côté admission de l'au moins une soupape d'admission et une partie de turbine en connexion fluidique avec le côté échappement de l'au moins une soupape d'échappement, dans lequel procédé le moteur est lancé dans un premier mode de fonctionnement dans lequel le moteur fonctionne en-dessous d'une, ou à une, charge prédéterminée, et de l'air de combustion est pressurisé avec la partie de compresseur de l'agencement de turbocompresseur, la soupape d'admission est commandée par un premier profilé de soulèvement de soupape d'admission et l'air est introduit dans le cylindre, du carburant est brûlé dans le moteur (10) au moyen de l'air de combustion, la soupape d'échappement est commandée par un premier profilé de soulèvement de soupape d'échappement et les gaz d'échappement générés pendant la combustion sont envoyés vers la partie de turbine de l'agencement de turbocompresseur, **caractérisé en ce que** le moteur est lancé dans un second mode de fonctionnement au-dessus de la charge prédéterminée pendant lequel le point de travail de la partie de compresseur (25.1) dans le schéma du compresseur est déplacé plus loin de la ligne de crête, augmentant le débit d'air entre un échappement de la partie de compresseur et une admission de la partie de turbine en augmentant le chevauchement de la période d'ouverture de la soupape.

2. Procédé de fonctionnement d'un moteur à pistons selon la revendication 1, **caractérisé en ce que** la fermeture de la soupape d'admission est avancée en comparaison avec celle du premier mode de fonctionnement.

3. Procédé de fonctionnement d'un moteur à pistons selon la revendication 1, **caractérisé en ce que** pendant le second mode de fonctionnement, la fermeture de la soupape d'admission est commandée pour être fermée à 1 % de l'alésage du piston à un angle de vilebrequin entre 35-65° avant le point mort bas.

4. Procédé de fonctionnement d'un moteur à pistons selon la revendication 1, 2 ou 3, **caractérisé en ce que** pendant le second mode de fonctionnement, la fermeture du soulèvement de soupape d'admission est commandée pour être fermée à 1 % de l'alésage du cylindre à un angle de vilebrequin d'environ 20° plus tôt que pendant le premier mode de fonctionnement.

5. Procédé de fonctionnement d'un moteur à pistons selon la revendication 1, **caractérisé en ce que** pendant le second mode de fonctionnement, le débit d'air entre un échappement de la partie de compresseur et une admission de la partie de turbine est augmenté en admettant plus d'air à travers un conduit de dérivation (55) prévu dans le moteur (10) s'étendant entre un côté échappement de la partie de compresseur et un côté admission de la partie de turbine.

6. Procédé de fonctionnement d'un moteur à pistons selon la revendication 1, **caractérisé en ce que** du carburant est enflammé par un allumage extérieur et pendant le premier mode de fonctionnement, la fermeture du soulèvement de soupape d'échappement et l'ouverture du soulèvement de soupape d'admission se chevauchent, formant une zone de balayage, et que pendant le second mode de fonctionnement, la zone de balayage (230) est commandée pour être 5 - 300 % plus grande que pendant le premier mode de fonctionnement.

7. Procédé de fonctionnement d'un moteur à pistons selon la revendication 1, **caractérisé en ce qu'**un allumage de compression est pratiqué dans le moteur et pendant le premier mode de fonctionnement, la fermeture du soulèvement de soupape d'échappement et l'ouverture du soulèvement de soupape d'admission se chevauchent, formant une zone de balayage (230), et que pendant le second mode de fonctionnement, la zone de balayage est commandée pour être 5 - 60 % plus grande que pendant le premier mode de fonctionnement.

8. Procédé de fonctionnement d'un moteur à pistons selon la revendication 1, **caractérisé en ce que** pendant le second mode de fonctionnement, la zone de balayage (230) est supérieure à 150 %deg.

9. Procédé de fonctionnement d'un moteur à pistons selon la revendication 1, **caractérisé en ce que** les soupapes d'admission (35) fonctionnent de telle façon que pendant le mouvement d'ouverture, la soupape (35) est à une position de 1 % tandis que l'angle de vilebrequin est situé entre 15-50° avant le point mort haut.

10. Procédé de fonctionnement d'un moteur à pistons selon la revendication 1, **caractérisé en ce que** le système de fonctionnement de soupapes (45, 50) fonctionne de telle sorte qu'une zone de balayage (230) est asymétrique de telle sorte que le profilé de soulèvement de soupape d'admission forme une aire plus grande que le profilé de soulèvement de soupape d'échappement par rapport au point mort haut.

11. Procédé de fonctionnement d'un moteur à pistons selon l'une quelconque des revendications précédentes 1 - 9, **caractérisé en ce que** le temps d'injection de carburant pendant le second mode de fonctionnement est d'au moins 0-5° en avance de celui du premier mode de fonctionnement.

12. Procédé de fonctionnement d'un moteur à pistons selon l'une quelconque des revendications précédentes 1 - 10, **caractérisé en ce que** la charge prédéterminée est de 70-85 % de la charge maximale du moteur.

13. Procédé de fonctionnement d'un moteur à pistons selon l'une quelconque des revendications précédentes 1 - 12, **caractérisé en ce que** le moteur fonctionne pendant le second mode de fonctionnement au-dessus de la charge de moteur prédéterminée, de sorte que pendant la combustion du carburant au moyen de l'air de combustion pressurisé par un montage de turbocompresseur, les soupapes d'admission du moteur sont fermées plus tôt que dans le premier mode de fonctionnement, et la pression de suralimentation, obtenue par le montage de turbocompresseur est augmentée, et la quantité d'air de dérivation entre un côté échappement de la partie de compresseur (25.1) et un côté admission de la partie de turbine est augmentée, augmentant le débit massique de l'air à travers la partie de compresseur.

14. Procédé de fonctionnement d'un moteur à pistons selon la revendication 13, **caractérisé en ce que** la pression de suralimentation est augmentée en fermant une soupape de refoulement du montage de turbocompresseur pendant le second mode de fonctionnement.

15. Système de commande (200) pour un moteur à pistons suralimenté par turbocompresseur présentant un turbocompresseur avec une soupape de refoulement, des soupapes d'admission (35) et d'échappement (40), dans lequel au moins les soupapes d'admission et d'échappement comprennent un système de fonctionnement de soupapes réglable (45, 50), le système de commande (200) comprenant une unité de traitement (202), une unité de transmission de signal de commande (204) et une unité de réception de signal de commande (206), l'unité de transmission de signal étant reliée au moins à l'un des systèmes de fonctionnement de soupapes du moteur (45, 50) et l'unité de réception de signal étant en liaison avec des capteurs du moteur surveillant la charge du moteur, la vitesse et/ou au moins une variable de procédé de combustion, **caractérisé en ce que** l'unité de traitement est agencée pour traiter les signaux reçus par l'unité de réception de signal et fournir le signal à transmettre par l'unité de transmission de signal afin de maintenir la marge de crête réelle entre une valeur inférieure et supérieure définie, en utilisant les étapes suivantes :

1) si la marge de crête réelle est inférieure à une valeur inférieure définie

- le système de fonctionnement de soupapes (45, 50) est commandé pour faire fonctionner les soupapes de façon à ce que la taille de la zone de balayage (230) soit augmentée, c'est à dire que le chevauchement de la soupape soit augmenté autour de l'angle de vilebrequin de 360° et/ou
- le système de fonctionnement de soupapes d'admission (45) est commandé pour faire fonctionner la soupape d'admission de façon à ce que le temps de fermeture soit retardé,

2) si la marge de crête réelle est supérieure à une valeur supérieure définie

- le système de fonctionnement de soupapes (45, 50) est commandé pour faire fonctionner les soupapes de façon à ce que la taille de la zone de balayage (230) soit réduite, c'est à dire que le chevauchement de la soupape est réduit autour de l'angle de vilebrequin de 360° et/ou
- le système de fonctionnement de soupapes (45) est commandé pour faire fonctionner la soupape d'admission de façon à ce que le temps de fermeture soit avancé.

16. Système de commande (200) pour un moteur à pistons à quatre temps suralimenté par turbocompresseur selon la revendication 14, **caractérisé en ce qu'**une modification de l'état du système de fonctionnement de soupapes est lancé en se basant sur les informations de n'importe lequel des capteurs de moteur surveillant la charge du moteur, la vitesse et au moins une variable de procédé de combustion.

17. Système de commande (200) pour un moteur à pistons à quatre temps suralimenté par turbocompresseur selon la revendication 14, **caractérisé en ce que** le système de commande est agencé pour fonctionner de telle sorte que tandis que 70-73 % de la charge est dépassée, le système de commande règle et/ou maintient la soupape de refoulement (25.3) dans l'état fermé, et avance le temps de fermeture (220') de la soupape d'admission et retarde la fermeture (210') de la soupape d'échappement.

**FIG. 1**

**FIG. 2**

**FIG. 3**

[%]
(lift/cyl.diam)

210
210'
220

220'

230

8
7
6
5
4
3
2
1

300 330 360 390 420 450 480 510 540 [deg]
Crank Angle

**FIG. 4**

[%]
(lift/cyl.diam)

210
210'
220

220'

230

8
7
6
5
4
3
2
1

300 330 360 390 420 450 480 510 540 [deg]
Crank Angle

**FIG. 5**

10

45    30

35                      35

15                      61

                        40

20

50    30

200

207

202

25.2

25.1

25

**FIG. 6**

**FIG. 7**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9830787 A1
- WO 2008000899 A1
- US 6105555 A
- US 2003164163 A
- WO 2008000899 A